# EUROPÄISCHE PATENTANMELDUNG

(11) **EP 2 650 109 A1**
(43) Veröffentlichungstag der Anmeldung: **16.10.2013**
(21) Anmeldenummer: 13160796.2
(22) Anmeldetag: 25.03.2013
(51) Int. Cl.: B29C 70/38, B29C 31/08, B29B 13/02, B23Q 3/08, B25J 15/06

(54) **Vorrichtung und System zum Halten und Erwärmen eines Vorformlings und Verfahren zum Erwärmen eines Vorformlings**

(30) Priorität: 13.04.2012 DE 102012103197
(71) Anmelder: REHAU AG + Co, 95111 Rehau (DE)
(72) Erfinder: Zapf, Armin, 91413 Neustadt/Aisch (DE); Beer, Christian, 95158 Kirchenlamitz (DE)

(57) **Zusammenfassung**

Die Erfindung betrifft eine Vorrichtung (10) zum Halten und Erwärmen eines Vorformlings (12), mit einer Halteeinrichtung (14) zum Halten des Vorformlings (12) durch Saugkraft und wenigstens einer Erwärmungsvorrichtung (16) zum Erwärmen des Vorformlings (12), wobei die Halteeinrichtung (14) wenigstens einen einseitig offenen Hohlraum (18) aufweist, wobei der Zutritt zu dem Hohlraum (18) durch wenigstens ein Gitterelement (24) aus einem gitterförmigen Material (25) versperrt ist, wobei eine Vorformling-Seite (26) des Vorformlings (12) an eine Anlageseite (28) des Gitterelements (24) anlegbar ist, wobei zum Halten der Vorformling-Seite (26) an der Halteeinrichtung (14) durch Saugkraft die Vorformling-Seite (26) durch Aktivieren einer pneumatischen Einrichtung (30) an die Anlageseite (28) ansaugbar ist und dabei die offene Seite (22) verschließt, wobei die Erwärmungsvorrichtung (16) zum Erwärmen des Vorformlings (12) vorgesehen ist, wenn der Vorformling (12) mit Vorformling-Seite (26) an der Anlageseite (28) anliegt. Die Erfindung betrifft ferner ein System (52) zum Halten und Erwärmen eines Vorformlings (12) und Verfahren zum Erwärmen eines Vorformlings (12).

## Beschreibung

### Hintergrund der Erfindung

Die vorliegende Erfindung betrifft eine Vorrichtung und ein System zum Halten und Erwärmen eines Vorformlings und Verfahren zum Erwärmen eines Vorformlings.

Es ist bekannt aus einem Vorformling, der eine Mehrzahl von flächig ausgebildeten (bzw. im Wesentlichen flächig ausgebildeten), faserverstärkten Matten oder gelegen (im Folgenden ebenfalls als Matten bezeichnet) umfasst bzw. aus diesen Matten gebildet ist, ein faserverstärktes Bauteil herzustellen, und zwar durch Formen bzw. Verformen des Vorformlings in einem Formwerkzeug zum Formen der endgültigen Kontur des Bauteils. Der Vorformling selbst wird meist dadurch ausgebildet, dass die Matten auf einem Werkstückträger durch Ablegen und fortlaufendes Aufbauen der Matten zu dem Vorformling aufgebaut werden. Nach einer Lagefixierung der Matten zueinander, die während oder nach Abschluss des Aufbaus des Vorformling an mehreren Stellen vorgenommen wird, muss der Vorformling aufwendig unter Verwendung eines oder mehrerer Greifarme wenigstens eines Roboters oder vergleichbaren Handlinggerätes von dem Werkstückträger entfernt, zu dem Formwerkzeug hin transportiert und in das Formwerkzeug eingebracht werden. Hierfür müssen die Greifarme den Vorformling an ausgewählten bzw. vorgegebenen Stellen ergreifen, um das Durchhängen des Vorformlings - welches beim Transport zur einer Verformung des Vorformlings führen kann, insbesondere auch durch ein Lösen oder einer Beschädigung der Lagefixierung - möglichst gering zu halten, einhergehend mit einem gro-βen technischen Aufwand.

Sofern es sich um einen Vorformling handelt, bei dem die Fasern wenigstens teilweise oder zur Gänze in eine thermoplastische Matrix eingebettet sind, wird die thermoplastische Matrix der Matten durch Erwärmen wenigstens teilweise oder zur Gänze in einen fließfähigen Zustand überführt. Durch Verformen der sich im fließfähigen Zustand befindenden thermoplastischen Matrix erfolgt dann die Ausbildung des faserverstärkten Bauteils in dem Formwerkzeug, wobei es beim Transport der erwärmten Matten zu dem Formwerkzeug mittels des Roboters zu einer in der Regel unerwünschten Abkühlung des Vorformlings kommt. Diese Abkühlung muss nach oder während des Transports aufwendig durch geeignetes Erwärmen im Formwerkzeug wieder ausgeglichen werden.

### Zugrundeliegende Aufgabe

Es ist Aufgabe der Erfindung, eine Vorrichtung und ein System zum Halten und Erwärmen eines Vorformlings anzugeben, mit welchen auf einfache und praktische Weise ein Transport eines erwärmten Vorformlings ohne wesentliche Abkühlung des Vorformlings möglich ist, und ein Verfahren zum Erwärmen eines Vorformlings mit einer derartigen Vorrichtung und ein Verfahren zum Erwärmen eines Vorformlings mit einem derartigen System anzugeben.

### Erfindungsgemäße Lösung

Diese Aufgabe wird erfindungsgemäß mit einer Vorrichtung mit den Merkmalen des Anspruchs 1, mit einem System mit den Merkmalen des Anspruchs 12 und mit Verfahren mit den Merkmalen der Ansprüche 14 und 16 gelöst.

Die erfindungsgemäße Vorrichtung zum Halten und Erwärmen eines Vorformlings weist eine Halteeinrichtung zum Halten des Vorformlings durch Saugkraft und wenigstens eine Erwärmungsvorrichtung zum Erwärmen des Vorformlings auf. Die Halteeinrichtung weist wenigstens einen einseitig offenen Hohlraum auf, wobei der Zutritt bzw. Zugang zu dem Hohlraum über die offene Seite des Hohlraums durch wenigstens ein Gitterelement aus einem gitterförmigen Material versperrt ist. Eine Vorformling-Seite des Vorformlings ist an eine Anlageseite des Gitterelements anlegbar. Die erfindungsgemäße Vorrichtung weist ferner wenigstens eine pneumatische Einrichtung auf, die eine luftleitende Verbindung zu dem Hohlraum aufweist und eingerichtet ist, Luft über die luftleitende Verbindung aus dem Hohlraum zu saugen. Durch Aktivieren der pneumatischen Einrichtung ist Luft von außerhalb des Hohlraums durch die Öffnungen des gitterförmigen Materials hindurch in den Hohlraum einströmbar und über die luftleitende Verbindung aus dem Hohlraum ausströmbar. Zum Halten der Vorformling-Seite an der Halteeinrichtung durch Saugkraft ist die Vorformling-Seite durch Aktivieren der pneumatischen Einrichtung an die Anlageseite ansaugbar und verschließt dabei die offene Seite, wobei die Vorformling-Seite in dem angesaugten Zustand an der Anlageseite anliegt. Die Erwärmungsvorrichtung ist an oder in der Halteeinrichtung angeordnet und zum Erwärmen des Vorformlings vorgesehen, wenn der Vorformling mit der Vorformling-Seite an der Anlageseite anliegt und / oder wenn der Vorformling mit der Vorformling-Seite an die Anlageseite angesaugt ist. Vorzugsweise ist die Erwärmungsvorrichtung in dem einseitig offenen Hohlraum angeordnet.

Die erfindungsgemäße Vorrichtung zum Halten und Erwärmen eines Vorformlings ermöglicht auf einfache und praktische Weise den Transport des Vorformlings ohne hierfür aufwendig mehrere Greifarme wenigstens eines Roboters vorsehen zu müssen, wie es bei bekannten Lösungen der Fall ist. Der Vorformling kann einfach durch Saugkraft an der Vorrichtung bzw. der Halteeinrichtung der Vorrichtung gehalten werden und die Vorrichtung kann zum Transport des Vorformlings zusammen mit dem gehaltenen Vorformling bewegt werden. Durch die Saugkraft-Haltung bzw. den Unterdruck in dem einseitig offenen Hohlraum kann ein sicherer Halt des Vorformlings auch bei ruckartigen Bewegungen bereitgestellt werden. Der Transport bzw. die Bewegung der erfindungsgemäßen Vorrichtung kann hierbei ohne einen aufwendigen Einsatz von mehreren Roboterarmen bzw. Greifarmen unter Verwendung einer einfachen Transportvorrichtung vorgenommen werden, welche die Vorrichtung aufnimmt und transportiert. Durch die Saugkraft-Haltung kann insbesondere vorteilhaft ein Durchhängen des Vorformlings vollständig vermieden oder sehr gering gehalten werden bzw. der Durchhängungsgrad kann sehr gering ausgebildet werden. Dies ist von großem Vorteil, da bei den bekannten Lösungen ein übermäßiges Durchhängen beim Transport zur einer unerwünschten Verformung des Vorformlings führen kann, insbesondere auch z.B. durch ein durch das Durchhängen bewirktes Lösen oder Beschädigen einer Lagefixierung der Matten des Vorformlings zueinander. Vorzugsweise besteht die erfindungsgemäße Vorrichtung zumindest im Kontaktbereich zu dem Vorformling aus einem metallischen oder keramischen Werkstoff. Insbesondere das gitterförmige Material kann einen metallischen und/oder keramischen Werkstoff umfassen. Im Gegensatz zu bekannten Greif-/Handlingsystemen kann die erfindungsgemäße Vorrichtung in diesem Fall auch für Vorformlinge eingesetzt werden, die eine Matrix aus einem Hochtemperaturthermoplasten aufweist.

Durch die Saugkraft-Haltung bzw. den Unterdruck in dem Hohlraum wird ferner vorteilhaft der Sauerstoffpartialdruck in dem Hohlraum wesentlich reduziert, einhergehend mit einer Reduzierung der Oxidation des Matrixmaterials der Matten, also des Matrixmaterials, in welches die Fasern wenigstens teilweise oder zur Gänze eingebettet sind. Dies ist insbesondere dann von Vorteil, wenn es sich bei dem Matrixmaterial um ein oxidationsempfindliches Matrixmaterial handelt, wie z.B. Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES),), Polybutylenterephthalat (PBT), Polyetheretherketon (PEEK), Polyetherimid (PEI), Polyethylenterephthalat (PET), vergleichbare Technische-oder Hochtemperatur-Kunststoffmaterialien oder Kombinationen der vorgenannten Kunststoffmaterialien.

Die Lagefixierung der Matten des Vorformlings kann hierbei z.B. unter Ausbildung wenigstens einer oder mehrerer stoffschlüssiger Verbindungen zwischen den Matten durch Verschweißen bzw. mittels eines Schweißverfahrens vorgenommen werden. Vorzugsweise erfolgt die Lagefixierung der Matten dabei durch ein Ultraschall- und / oder Heizelement-und / oder Laserschweißverfahren. Die Lagefixierung der Matten kann während oder nach Abschluss des Aufbaus bzw. der Ausbildung des Vorformlings vorgenommen werden. Zur Lagefixierung der Matten zueinander können zudem textiltechnische Verfahren, vorzugsweise Vernadeln und / oder Vernähen eingesetzt werden.

Durch Vorsehen der wenigstens einen Erwärmungsvorrichtung kann der Vorformling insbesondere während des Transports z.B. zu einem Formwerkzeug auf einfache und praktische Weise erwärmt werden und dadurch insbesondere während des Transports eine Abkühlung des Vorformlings deutlich reduziert oder vollständig vermieden werden. Von einem Ausgleich einer transportbedingten Abkühlung des Vorformlings durch aufwendiges Erwärmen z.B. im Formwerkzeug - wie es bei bekannten Lösungen erforderlich ist - kann durch Einsatz der erfindungsgemäßen Vorrichtung vorteilhaft abgesehen werden. Dies ist insbesondere dann von Vorteil, wenn es sich um einen Vorformling handelt, bei dem die Fasern der Matten wenigstens teilweise oder zur Gänze in eine thermoplastische Matrix eingebettet sind, die durch Erwärmen wenigstens teilweise oder zur Gänze in einen fließfähigen Zustand überführt werden. Durch Verformen der sich im fließfähigen Zustand befindenden thermoplastischen Matrix in einem Formwerkzeug zum Formen der endgültigen Kontur des Bauteils kann aus dem Vorformling ein faserverstärktes Bauteil gebildet werden, wobei ein fehlerfreies Verformen im Formwerkzeug nur möglich ist, wenn transportbedingte Abkühlvorgänge - wie erfindungsgemäß vorgesehen - deutlich reduziert oder vollständig vermieden werden oder wenn der Vorformling vor dem Verformen im Formwerkzeug aufwendig nacherwärmt wird. Alternativ kann die thermoplastische Matrix des Vorformlings auch ausschließlich über die wenigstens eine Erwärmungsvorrichtung in einen fließfähigen Zustand überführt werden, so dass diese nicht nur für eine Vermeidung bzw. Reduzierung einer transportbedingten Abkühlung vorgesehen ist.

Durch Vorsehen der wenigstens einen Erwärmungsvorrichtung kann besonders vorteilhaft auch die Prozesssicherheit deutlich gesteigert bzw. verbessert werden. So kann insbesondere bei der Herstellung bzw. Serienfertigung einer Vielzahl von Bauteilen aus einer Vielzahl von Vorformlingen der Ausschuss infolge einer unerwünschten transportbedingten Abkühlung der Vorformlinge im Unterschied zu den bekannten Lösungen deutlich reduziert oder völlig vermieden werden.

Der Vorformling bzw. dreidimensionale Vorformling selbst umfasst wenigstens eine oder eine Mehrzahl von faserverstärkten Matten, wobei die Matten flächig ausgebildet sind bzw. im Wesentlichen flächig ausgebildet sind und insbesondere unidirektional-faserverstärkte Matten sein können. Die Matten des Vorformlings können aufeinandergelegt und / oder aneinander gelegt und / oder nebeneinandergelegt sein. Bevorzugt bestehen die Matten aus den Fasern und einer thermoplastischen Matrix bzw. einem thermoplastischen Kunststoffmaterial, wobei die Fasern in die thermoplastische Matrix bzw. das thermoplastische Kunststoffmaterial wenigstens teilweise oder zur Gänze eingebettet sind bzw. wobei die Matrix bzw. das thermoplastische Kunststoffmaterial die Fasern wenigstens teilweise oder zur Gänze umgibt. Die Faserverstärkung der Matten wird vorzugsweise durch Mineralfasern, insbesondere Glasfasern, und / oder Carbonfasern, und / oder Aramidfasern und / oder polymeren Fasern, und / oder synthetischen Fasern und / oder aus Fasern von nachwachsenden Rohstoffen und / oder aus Basaltfasern und / oder aus einer Kombination der vorgenannten Fasern gebildet. Insbesondere kann es sich bei den Fasern um Endlosfasern handeln.

Der Zutritt bzw. Zugang zu dem Hohlraum über die offene Seite des Hohlraums ist durch wenigstens ein Gitterelement aus einem gitterförmigen Material versperrt ist, wobei eine Vorformling-Seite des Vorformlings an eine Anlageseite des Gitterelements anlegbar bzw. ansaugbar ist. Durch Vorsehen des gitterförmigen Materials liegt der Vorformling auf nur auf sehr kleinflächigen Auflageflächen auf. Dies begünstigt vorteilhaft eine sehr gleichmä-βige bzw. lückenlose Erwärmung des Vorformlings. Besonders vorteilhaft kann durch Vorsehen des gitterförmigen Materials durch Bereitstellen eines nur sehr geringen Unterdruckniveaus ein sicheres bzw. festes Halten des Vorformlings an der Anlageseite durch Saugkraft bereitgestellt werden. Ein derartiges sehr geringes Unterdruckniveaus ist vorteilhaft mittels kostengünstiger pneumatischer Einrichtungen erzeugbar.

Bevorzugt ist die Erwärmungsvorrichtung eine Wärmestrahlungsquelle zum Bestrahlen des Vorformlings mit Wärmestrahlung, wobei die Erwärmungsvorrichtung besonders bevorzugt eine Infrarotstrahlungsquelle zum Bestrahlen des Vorformlings mit Infrarotstrahlung ist. Mit einer Wärmestrahlungsquelle, insbesondere mit einer Infrarotstrahlungsquelle, ist eine sehr gleichmäßige und schnelle Erwärmung des Vorformlings möglich.

Die Erwärmungsvorrichtung kann z.B. eine Halogenlampe sein oder ganz allgemein eine beliebige Wärmequelle bzw. Temperaturquelle, ggf. auch in Verbindung mit einem geeigneten Umluftsystem. Die Wärmequelle kann eine Infrarotstrahlungsquelle sein, mit welcher insbesondere kurzwellige oder mittelwellige Infrarotstrahlung erzeugbar ist. Die Halogenlampe bzw. der Halogenstrahler kann z.B. insbesondere ein Halogenstrahler mit einer effektiven Heizleistung von ca. 35 bis 40 kW/m² sein. Die Strahlerleistung ist abhängig von der bestrahlten Fläche und eventuell eingesetzten Reflektoren und bewegt sich typischerweise im Bereich von 50 bis 2500 W.

Bei einer bevorzugten Ausführungsform der erfindungsgemäßen Vorrichtung weist die Anlageseite des Gitterelements eine Kontur auf, die der Kontur des Vorformlings angepasst oder anpassbar ist, einhergehend mit der Schaffung eines sehr sicheren und festen Halts des Vorformlings an der Halteeinrichtung durch Saugkraft in Verbindung mit einer Konturanpassung. Dies ist insbesondere bei einem Vorformling von Vorteil, der z.B. in Form eines dreidimensionalen Vorgeleges ausgebildet ist.

Bei einer praktischen Ausführungsform ist die pneumatische Einrichtung zum Lösen der Vorformling-Seite von dem Gitterelement ferner eingerichtet, zum Ausbilden eines Überdrucks in dem Hohlraum, Luft von außerhalb des Hohlraums über die luftleitende Verbindung in den Hohlraum einströmen zu lassen. Die pneumatische Einrichtung ist bei dieser praktischen Ausführungsform also eingerichtet, Luft von außerhalb des Hohlraums über die luftleitende Verbindung in den Hohlraum einströmen zu lassen, um einen Überdruck in dem Hohlraum auszubilden, der zum Lösen der Vorformling-Seite von dem gitterförmigen Element vorgesehen ist bzw. zum Lösen der Vorformling-Seite von dem gitterförmigen Element durch Druckkraft vorgesehen ist. Eine gemäß dieser praktischen Ausführungsform ausgebildete erfindungsgemäße Vorrichtung ermöglicht auf einfache und praktische Weise ein Lösen des Vorformlings von der Halteeinrichtung bzw. der Anlageseite, um den Vorformling z.B. in ein Formwerkzeug einbringen zu können.

Bei einer besonders praktischen Ausführungsform weist die Halteeinrichtung ein Gehäuse auf, in dem der einseitig offene Hohlraum ausgebildet ist, wobei das Gehäuse ein erstes Gehäuseteil, ein zweites Gehäuseteil und ein die beiden Gehäuseteile verbindendes Verbindungselement aufweist, wobei das gitterförmige Element aus dem gitterförmigen Material ein erstes und ein zweites Teilelement umfasst, wobei das erste Teilelement an dem ersten Gehäuseteil und das zweite Teilelement an dem zweiten Gehäuseteil befestigt ist, wobei das erste Teilelement und das zweite Teilelement durch eine Schwenkachse miteinander verbunden sind, wobei das erste Teilelement zusammen mit dem ersten Gehäuseteil durch Schwenken um die Schwenkachse gegenüber dem zweiten Gehäuseteil und dem zweiten Teilelement verschwenkbar ist und umgekehrt, und wobei das Verbindungselement ein durch das Verschwenken der Gehäuseteile verformbares Verbindungselement ist.

Die beiden Teilelemente bilden zusammen mit der Schwenkachse vorteilhaft eine durch Verschwenken eines der beiden Teilelemente gegenüber dem anderen Teilelement in ihrer Kontur oder Form veränderbare Anlageseite, die besonders vorteilhaft durch Verschwenken an unterschiedliche Konturen des Vorformlings, der insbesondere auch ein dreidimensionaler Vorformling sein kann, anpassbar ist bzw. an diese wenigstens annäherbar ist. Das Verbindungselement ist ein durch das Verschwenken der Gehäuseteile verformbares Verbindungselement und durch die Verformbarkeit vorteilhaft an unterschiedliche Schwenkstellungen der beiden Teilelemente zueinander anpassbar. Durch die Anpassbarkeit an unterschiedliche Konturen des Vorformlings kann vorteilhaft ein sehr sicherer und fester Halt des Vorformlings an der Halteeinrichtung durch Saugkraft in Verbindung mit einer Konturanpassung geschaffen bzw. bereitgestellt werden.

Bei einer weiteren praktischen Ausführungsform bestehen die Gitterstege des gitterförmigen Materials des Gitterelements aus einem bandförmigen Material, wobei jede der Öffnungen des gitterförmigen Materials von wenigstens drei Flachseiten des bandförmigen Materials begrenzt ist. Durch Vorsehen eines bandförmigen Materials, welches insbesondere ein metallisches bandförmiges Material sein kann, kann eine sehr stabile bzw. robuste Anlageseite bereitgestellt werden. Besondere bevorzugt ist die Vorformling-Seite zum Anlegen an die Anlageseite an Seitenflächen der Gitterstege bzw. des bandförmigen Materials anlegbar, wobei wenigstens ein Randabschnitt jedes Gitterstegs zu der Seitenfläche hin, an welche die Vorformling-Seite anlegbar ist, mit abnehmender Dicke ausgebildet ist. Insbesondere kann hierbei der Randabschnitt nach Art einer Messer-Schneide mit einer Kante bzw. Seitenfläche ausgebildet sein, an bzw. auf welcher die Vorformling-Seite anlegbar bzw. auflegbar ist.

Infolge der vorgesehenen Ausbildung des Randabschnitts mit zu der Seitenfläche hin abnehmenden Dicke kann der Vorformling vorteilhaft an nur sehr kleinflächigen Seitenflächen bzw. Auflageflächen anliegen. Dies begünstigt vorteilhaft eine sehr gleichmäßige bzw. lückenlose Erwärmung des Vorformlings. Besonders vorteilhaft kann hierdurch auch durch Bereitstellen eines nur sehr geringen Unterdruckniveaus ein sicheres bzw. festes Halten des Vorformlings an der Anlageseite durch Saugkraft bereitgestellt werden. Infolge des nur sehr geringen erforderlichen Unterdruckniveaus bilden sich vorteilhaft auch keine Markierungen oder nur schlechtestenfalls nur sehr geringfügig ausgeprägte Markierungen an dem Vorformling infolge des Anliegens an den Seitenflächen aus.

Bei einer bevorzugten Ausführungsform bestehen die Gitterstege des gitterförmigen Materials aus einem Drahtmaterial. Besonders bevorzugt weisen die Gitterstege eine Dicke auf, die innerhalb eines Bereichs von 0,1 mm bis 3 mm liegt. Insbesondere durch Vorsehen eines gitterförmigen Materials mit Gitterstegen aus einem Drahtmaterial kann der Vorformling vorteilhaft an nur auf sehr kleinflächigen Auflageflächen anliegen, einhergehend mit einer besonders gleichmäßigen bzw. lückenlosen Erwärmung des Vorformlings, besonders wenn die Gitterstege eine Dicke aufweisen, die innerhalb des Bereichs von 0,1 mm bis 3 mm liegt. Durch Vorsehen der kleinflächigen Auflageflächen ist die Vorrichtung gut auch an unebene Oberflächenbereiche des Vorformlings anpassbar bzw. gegenüber diesen tolerant. Die Gitterstege können im Querschnitt auch spitz zulaufend ausgebildet sein, vergleichbar einer Messer-Schneide. Das spitzzulaufende Ende der Gitterstege ist vorzugsweise an der Anlageseite des Gitterelements ausgebildet.

Bei einer praktischen Ausführungsform ist an dem Gitterelement wenigstens ein Kontaktsensor zur Sensierung bzw. Erfassung eines Kontakts mit dem Vorformling angebracht, wobei besonders bevorzugt eine Mehrzahl von Kontaktsensoren an dem Gitterelement angebacht sind. Der oder die Kontaktsensoren können vorteilhaft z.B. für den Aufbau einer Prozessüberwachung verwendet werden, insbesondere derart, dass sie bei bestehendem Kontakt des Gitterelements bzw. des Kontaktsensors zu dem Vorformling ein den bestehenden Kontakt anzeigendes bzw. kennzeichnendes Kontaktsignal ausgeben, welches - ggf. nach elektronischer Verstärkung - in Form eines Eingangssignals bzw. Überwachungssignals der Prozessüberwachung bzw. der Regelung der Prozessüberwachung zuführbar bzw. an diese übertragbar ist. Insbesondere kann der Kontaktsensor an einem Gitterkonten des Gitterelements angebracht sein, wobei besonders bevorzugt an jedem Gitterknoten wenigstens einer Teilanzahl aller Gitterkonten des Gitterelements ein Kontaktsensor angebracht ist, einhergehend mit einer sehr sensiblen vorteilhaften Sensierung bzw. Erfassung des Kontakts mit dem Vorformling. Von jedem Gitterknoten des Gitterelements verlaufen Gitterstege des Gitterelements zu benachbarten Gitterknoten des Gitterelements.

Das erfindungsgemäße System weist eine erste und ein zweite erfindungsgemäße Vorrichtung zum Halten und Erwärmen eines Vorformlings auf. Durch die Kombination der beiden Vorrichtungen in dem erfindungsgemäßen System kann insbesondere einer transportbedingten Abkühlung eines erwärmten Vorformlings sehr wirksam entgegengewirkt werden. So kann bevorzugt die zweite Vorrichtung z.B. in naher Umgebung eines Formwerkzeugs angeordnet sein und die erste Vorrichtung kann dafür vorgesehen sein, den Vorformling z.B. von einem Werkstückträger durch Ansaugen aufzunehmen, mittels der Erwärmungsvorrichtung der ersten Vorrichtung zu erwärmen und zu der zweiten Vorrichtung zu transportieren, um dort die zweite Vorformling-Seite an die Anlageseite des Gitterelements der zweiten Halteeinrichtung zu saugen bzw. saugen zu lassen und den Vorformling durch die Erwärmungsvorrichtung der zweiten Vorrichtung zu erwärmen. Auf diese Weise kann vor dem Einbringen des Vorformlings in das Formwerkzeug einer eventuellen Abkühlung des Vorformlings von der zweiten Vorformling-Seite her - welche beim Transport nicht dem Gitterelement der ersten Vorrichtung zugewandt ist - wirksam entgegengewirkt werden, und zwar durch Erwärmen mittels der Erwärmungsvorrichtung der zweiten Vorrichtung.

Bei dem erfindungsgemäßen System ist die erste Halteeinrichtung zum Halten einer ersten von zwei voneinander abgewandten Vorformling-Seiten des Vorformlings vorgesehen, wobei die Erwärmungsvorrichtung der ersten Vorrichtung zum Erwärmen des Vorformlings vorgesehen ist, wenn der Vorformling mit ersten Vorformling-Seite an der Anlageseite des Gitterelements der ersten Halteeinrichtung anliegt und / oder wenn der Vorformling mit ersten Vorformling-Seite an die Anlageseite des Gitterelements der ersten Halteeinrichtung angesaugt ist.

Bei dem erfindungsgemäßen System ist die zweite Halteeinrichtung zum Halten der zweiten Vorformling-Seite des Vorformlings vorgesehen, wobei die Erwärmungsvorrichtung der zweiten Vorrichtung zum Erwärmen des Vorformlings vorgesehen ist, wenn der Vorformling mit zweiten Vorformling-Seite an der Anlageseite des Gitterelements der zweiten Halteeinrichtung anliegt und / oder wenn der Vorformling mit zweiten Vorformling-Seite an die Anlageseite des Gitterelements der zweiten Halteeinrichtung angesaugt ist.

Bei dem erfindungsgemäßen System sind die erste Halteeinrichtung und die zweite Halteeinrichtung in einer gegenüberliegenden Anordnung anordenbar, bei der das Gitterelement der ersten Halteeinrichtung dem Gitterelement der zweiten Halteeinrichtung zugewandt ist, wobei der Vorformling in der gegenüberliegenden Anordnung zwischen den Gitterelementen anordenbar und die erste Vorformling-Seite an die Anlageseite des Gitterelements der ersten Halteeinrichtung und die zweite Vorformling-Seite an die Anlageseite des Gitterelements der zweiten Halteeinrichtung anlegbar ist. Durch Vorsehen der gegenüberliegenden Anordnung kann vorteilhaft auch nach dem Ansaugen der zweiten Vorformling- Seite an die Anlageseite des Gitterelements der zweiten Halteeinrichtung die erste Vorformling-Seite an der Anlageseite des Gitterelements der ersten Halteeinrichtung angelegt bleiben, um vorteilhaft den Vorformling beidseitig, also durch die wenigstens eine Erwärmungsvorrichtung der ersten Vorrichtung und die wenigstens eine Erwärmungsvorrichtung der zweiten Vorrichtung zu erwärmen.

Insbesondere kann, wenn die zweite Vorformling-Seite an die Anlageseite des Gitterelements der zweiten Halteeinrichtung angesaugt ist, durch Aktivieren der pneumatischen Einrichtung der ersten Vorrichtung auch in dem Hohlraum der ersten Halteeinrichtung ein Unterdruck erzeugt bzw. bereitgestellt werden. Auf diese Weise kann der Vorformling zum einen beidseitig durch die wenigstens eine Erwärmungsvorrichtung der ersten Vorrichtung und die wenigstens eine Erwärmungsvorrichtung der zweiten Vorrichtung erwärmt werden und ferner kann vorteilhaft der Sauerstoffpartialdruck in dem Hohlraum der ersten und der zweiten Halteeinrichtung deutlich reduziert werden, einhergehend mit einer Reduzierung der Oxidation des Matrixmaterials der Matten, also des Matrixmaterials, in welches die Fasern wenigstens teilweise oder zur Gänze eingebettet sind. Zum Erzeugen des beidseitigen Unterdrucks sind in den Hohlräumen der ersten und zweiten Halteeinrichtung sich voneinander unterscheidende Unterdrücke bzw. Drücke einzustellen.

Insbesondere durch den Einsatz des erfindungsgemäßen Systems kann besonders vorteilhaft die Prozesssicherheit bei der Herstellung bzw. Serienfertigung einer Vielzahl von Bauteilen aus einer Vielzahl von Vorformligen deutlich gesteigert bzw. verbessert werden, derart, dass ein Ausschuss infolge einer unerwünschten transportbedingten Abkühlung der Vorformlinge deutlich reduziert oder vollständig vermieden werden kann.

Zum Bewegen der ersten Vorrichtung und des an der ersten Vorrichtung gehaltenen Vorformlings zu der zweiten Vorrichtung kann z.B. eine Transporteinheit, wie z.B. ein Industrieroboter vorgesehen sein, welcher die erste Vorrichtung samt Vorformling ergreifen oder aufnehmen kann und zu der zweiten Vorrichtung bewegen kann, um die zweite Vorformling-Seite an die Anlageseite des Gitterelements der zweiten Halteeinrichtung anzulegen.

Bei einer praktischen Ausführungsform des erfindungsgemäßen Systems weist die erste Halteeinrichtung ein erstes Einhausungselement auf, und die zweite Halteeinrichtung weist ein zweites Einhausungselement auf, wobei das erste Einhausungselement sich um den einseitig offenen Hohlraum der ersten Halteeinrichtung herum umlaufend erstreckt bzw. wobei sich ein Abschnitt des ersten Einhausungselements um den einseitig offenen Hohlraum der ersten Halteeinrichtung herum umlaufend erstreckt, wobei das zweite Einhausungselement sich um den einseitig offenen Hohlraum der zweiten Halteeinrichtung herum umlaufend erstreckt bzw. wobei sich ein Abschnitt des zweiten Einhausungselements um den einseitig offenen Hohlraum der zweiten Halteeinrichtung herum umlaufend erstreckt, wobei das erste und das zweite Einhausungselement in der gegenüberliegenden Anordnung eine Einhausung mit einem umlaufenden Hohlraum ausbilden, der zum Einhausen eines umlaufenden Randbereichs des zwischen den Gitterelementen anordenbaren Vorformlings vorgesehen ist, wobei zum Erwärmen des eingehausten Randbereichs wenigstens eine weitere Erwärmungsvorrichtung in dem ersten und / oder zweiten Einhausungselement angeordnet ist.

Mit dieser praktischen Ausführungsform des erfindungsgemäßen Systems kann vorteilhaft auch ein Randbereich bzw. ein umlaufender Randbereich des zwischen den Gitterelementen anordenbaren Vorformlings, der nicht an die Anlageseite des Gitterelements der ersten bzw. zweiten Halteeinrichtung angesaugt ist bzw. an dieser Anlageseite anliegt, mittels der wenigstens einen weiteren Erwärmungsvorrichtung erwärmt werden. Von einem ggf. erforderlichen aufwendigen Nachheizen des umlaufenden Randbereichs kann durch die gemäß dieser praktischen Ausführungsform bereitstellbare Einhausung vorteilhaft abgesehen werden.

Das erfindungsgemäße Verfahren zum Erwärmen eines Vorformlings, der wenigstens eine oder eine Mehrzahl von flächig ausgebildeten (bzw. im Wesentlichen flächig ausgebildeten), faserverstärkten Matten umfasst, durch Verwendung einer erfindungsgemäßen Vorrichtung, umfasst die folgenden Schritte:
(A) Aufnehmen des Vorformlings mittels der Vorrichtung durch Ansaugen der Vorformling-Seite an die Anlageseite des Gitterelements der Halteeinrichtung, wobei zum Ansaugen die pneumatische Einrichtung aktiviert wird, und
(B) Erwärmen des Vorformlings durch die Erwärmungsvorrichtung.

Dieses erfindungsgemäße Verfahren ermöglicht auf einfache und praktische Weise eine schnelle und gleichmäßige (und damit auch prozesssichere) Erwärmung des Vorformlings, wobei die Matten des Vorformlings insbesondere auch unidirektional-faserverstärkte Matten sein können. Durch die erfindungsgemäße Vorrichtung kann der Vorformling in Schritt A auf einfache und praktische Weise z.B. von einem Werkstückträger aufgenommen werden und anschließend gemäß Schritt B durch die bzw. von der Erwärmungsvorrichtung erwärmt werden. Schritt B kann jedoch auch vor oder während des Schritts A vorgenommen werden bzw. erfolgen und insbesondere auch nach Schritt A fortgeführt werden.

Das Verfahren kann insbesondere vorteilhaft in einen Herstellungsprozess zur Herstellung einer Vielzahl von gleichen bzw. gleichartigen Bauteilen integriert bzw. eingebunden werden, wobei die Bauteile jeweils aus gleichen bzw. gleichartigen Vorformlingen geformt werden, und wobei die Vorformlinge jeweils vor dem Endformen bzw. Formen in dem Formwerkzeug durch Anwendung des erfindungsgemäßen Verfahrens erwärmt bzw. vorgewärmt werden können.

Während des Erwärmens in Schritt B kann der an der Vorrichtung gehaltene Vorformling zu einer vorgegebenen Position hin bewegt und in dieser angeordnet werden. Vorteilhaft kann also durch das Erwärmen während des Transports bzw. des Bewegens zu der vorgegebenen Position eine Abkühlung des Vorformlings (infolge einer Wärmeübertragung an die Umgebung während des Transports bzw. des Bewegens) deutlich reduziert oder vollständig vermieden werden. Die vorgegebene Position kann hierbei insbesondere eine vorgegebene Position innerhalb eines Formwerkzeugs sein, welches eingerichtet ist, aus dem Vorformling das Bauteil bzw. die endgültige Form bzw. Kontur des Bauteil zu formen. Von einem Ausgleich einer transportbedingten Abkühlung des Vorformlings durch aufwendiges Erwärmen nach dem Transport (z.B. im Formwerkzeug) - wie es bei bekannten Lösungen erforderlich ist - kann vorteilhaft abgesehen werden, einhergehend mit einer wesentlichen Verkürzung bzw. Reduzierung der Herstellungszeit.

Zum Bewegen der Vorrichtung und des an der Vorrichtung gehaltenen Vorformlings kann z.B. eine Transporteinheit, wie z.B. ein Industrieroboter vorgesehen sein, welcher die Vorrichtung samt Vorformling ergreifen oder aufnehmen kann und insbesondere zu dem Formwerkzeug bewegen kann.

Besonders bevorzugt kann in Schritt B in den wenigstens einen Hohlraum der Halteeinrichtung ein Schutzgas eingebracht werden. Durch Einbringen des Schutzgases kann beim Erwärmen des Vorformlings mittels der Erwärmungsvorrichtung eine Oxidation des Matrixdes Matrixmaterials der Matten, also des Matrixmaterials, in welches die Fasern wenigstens teilweise oder zur Gänze eingebettet sind, deutlich reduziert oder vollständig vermieden werden. Dies ist insbesondere dann von Vorteil, wenn es sich bei dem Matrixmaterial um ein oxidationsempfindliches Matrixmaterial handelt, wie z.B. Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES),), Polybutylenterephthalat (PBT), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien.

Das erfindungsgemäße Verfahren zum Erwärmen eines Vorformlings, der wenigstens eine oder eine Mehrzahl von flächig ausgebildeten (bzw. im Wesentlichen flächig ausgebildeten), faserverstärkten Matten umfasst, durch Verwendung eines erfindungsgemäßen Systems umfasst die folgenden Schritte:
(A) Aufnehmen des Vorformlings mittels der ersten Vorrichtung (bzw. durch die erste Vorrichtung) durch Ansaugen der ersten Vorformling-Seite an die Anlageseite des Gitterelements der ersten Halteeinrichtung, wobei zum Ansaugen die pneumatische Einrichtung der ersten Vorrichtung aktiviert wird,
(B) Erwärmen des Vorformlings durch die Erwärmungsvorrichtung der ersten Vorrichtung,
(C) Bewegen der ersten Vorrichtung und des an der ersten Vorrichtung durch Saugkraft gehaltenen Vorformlings zu der zweiten Vorrichtung und Anlegen der zweiten Vorformling-Seite an die Anlageseite des Gitterelements der zweiten Halteeinrichtung,
(D) Deaktivieren der pneumatischen Einrichtung der ersten Vorrichtung,
(E) Ansaugen der zweiten Vorformling-Seite an die Anlageseite des Gitterelements der zweiten Halteeinrichtung durch Aktivieren der pneumatischen Einrichtung der zweiten Vorrichtung, und
(F) Erwärmen des Vorformlings durch die Erwärmungsvorrichtung der zweiten Vorrichtung.

Insbesondere durch Anwenden dieses Verfahrens kann einer transportbedingten Abkühlung des Vorformlings sehr wirksam entgegengewirkt werden. So kann bevorzugt die zweite Vorrichtung in naher Umgebung eines Formwerkzeugs angeordnet sein und die erste Vorrichtung kann dafür vorgesehen sein, den Vorformling z.B. von einem Werkstückträger gemäß Schritt A durch Ansaugen aufzunehmen, gemäß Schritt B mittels der Erwärmungsvorrichtung der ersten Vorrichtung zu erwärmen und gemäß Schritt C zu der zweiten Vorrichtung zu bewegen und die zweite Vorformling-Seite an die Anlageseite des Gitterelements der zweiten Halteeinrichtung anzulegen, um dort gemäß Schritt E die zweite Vorformling-Seite an diese Anlageseite zu saugen und den Vorformling durch die Erwärmungsvorrichtung der zweiten Vorrichtung gemäß Schritt F zu erwärmen, und zwar nach dem Deaktivieren der pneumatischen Einrichtung der ersten Vorrichtung gemäß Schritt D, der nach Schritt C erfolgt bzw. vorgenommen wird. Auf diese Weise kann vor dem Einbringen des Vorformlings in das Formwerkzeug einer eventuellen Abkühlung des Vorformlings von der zweiten Vorformling-Seite her - welche beim Transport nicht dem Gitterelement der ersten Vorrichtung zugewandt ist bzw. von diesem Gitterelement abgewandt ist - wirksam entgegengewirkt werden, und zwar durch Erwärmen mittels der Erwärmungsvorrichtung der zweiten Vorrichtung. Bevorzugt wird das Erwärmen des Vorformlings durch die Erwärmungsvorrichtung der ersten Vorrichtung in Schritt B - das vorzugsweise nach Schritt A erfolgt bzw. vorgenommen wird, aber auch bereits vor oder während des Schritts A erfolgen bzw. vorgenommen werden kann - auch während des Schritts C vorgenommen. Dies hat den Vorteil, dass insbesondere während des Bewegens einer Abkühlung des Vorformlings wirksam entgegengewirkt werden kann. Schritt F kann vorzugsweise nach Schritt E vorgenommen werden bzw. erfolgen. Schritt F kann aber auch bereits vor oder während des Schritts E vorgenommen werden bzw. erfolgen.

Das obige, die Schritte A bis F umfassende Verfahren kann insbesondere vorteilhaft in einen Herstellungsprozess zur Herstellung einer Vielzahl von gleichen bzw. gleichartigen Bauteilen integriert bzw. eingebunden werden, wobei die Bauteile jeweils aus gleichen bzw. gleichartigen Vorformlingen geformt werden, und wobei die Vorformlinge jeweils vor dem Endformen in dem Formwerkzeug durch Anwendung des erfindungsgemäßen Verfahrens erwärmt bzw. vorgewärmt werden können, um insbesondere einer Abkühlung des Vorformlings wirksam entgegenwirken zu können. Insbesondere kann durch Anwenden dieses Verfahrens besonders vorteilhaft die Prozesssicherheit bei der Herstellung bzw. Serienfertigung einer Vielzahl von Bauteilen aus einer Vielzahl von Vorformligen deutlich gesteigert bzw. verbessert werden, derart, dass ein Ausschuss infolge einer unerwünschten transportbedingten Abkühlung der Vorformlinge deutlich reduziert oder vollständig vermieden werden kann.

Zum Bewegen der ersten Vorrichtung und des an der ersten Vorrichtung gehaltenen Vorformlings zu der zweiten Vorrichtung kann z.B. eine Transporteinheit, wie z.B. ein Industrieroboter vorgesehen sein, welcher die erste Vorrichtung samt Vorformling ergreifen oder aufnehmen kann und zu der zweiten Vorrichtung bewegen kann, um die zweite Vorformling-Seite an die Anlageseite des Gitterelements der zweiten Halteeinrichtung anzulegen.

Bei einer praktischen Ausführungsform des Verfahrens bleibt nach Schritt D die erste Vorformling-Seite an der Anlageseite des Gitterelements der ersten Halteeinrichtung angelegt - bzw. der angelegte Zustand der ersten Vorformling-Seite an der Anlageseite des Gitterelements der ersten Halteeinrichtung wird nach Schritt D beibehalten - und in Schritt F wird der Vorformling zusätzlich durch die Erwärmungsvorrichtung der ersten Vorrichtung erwärmt. So wird der Vorformling vorteilhaft beidseitig, also durch die wenigstens eine Erwärmungsvorrichtung der ersten Vorrichtung und die wenigstens eine Erwärmungsvorrichtung der zweiten Vorrichtung, erwärmt. Durch diese beidseitige Erwärmung kann zum einen einer Abkühlung sehr wirksam entgegengewirkt werden. Ferner kann - sofern es sich um einen Vorformling handelt, bei dem die Fasern wenigstens teilweise oder zur Gänze in eine thermoplastische Matrix eingebettet sind - die thermoplastische Matrix auch ausschließlich über die Erwärmungsvorrichtung der ersten und zweiten Vorrichtung in einen fließfähigen Zustand überführt werden. Durch Verformen der sich im fließfähigen Zustand befindenden thermoplastischen Matrix in einem Formwerkzeug zum Formen der endgültigen Kontur eines Bauteils kann aus dem Vorformling ein faserverstärktes Bauteil gebildet werden.

Bevorzugt kann bei dieser praktischen Ausführungsform des Verfahrens nach Schritt E die pneumatische Einrichtung der ersten Einrichtung zur Einstellung eines Unterdrucks in dem Hohlraum der ersten Einrichtung, der sich von dem Unterdruck in dem Hohlraum der zweiten Halteeinrichtung unterscheidet bzw. vorzugsweise kleiner ist als dieser, wieder aktiviert werden. Auf diese Weise kann der Vorformling zum einen beidseitig durch die wenigstens eine Erwärmungsvorrichtung der ersten Vorrichtung und die wenigstens eine Erwärmungsvorrichtung der zweiten Vorrichtung erwärmt werden und ferner kann vorteilhaft der Sauerstoffpartialdruck in dem Hohlraum der ersten und der zweiten Halteeinrichtung deutlich reduziert werden, einhergehend mit einer Reduzierung der Oxidation des Matrixmaterials der Matten, also des Matrixmaterials, in welches die Fasern wenigstens teilweise oder zur Gänze eingebettet sind. In den Hohlräumen der ersten und zweiten Halteeinrichtung sind sich voneinander unterscheidende Unterdrücke bzw. Drücke zur Sicherstellung der Saug-Haltung an der Anlageseite des Gitterelements der ersten oder zweiten Halteeinrichtung einzustellen.

Nach Schritt F kann bei der obigen praktischen Ausführungsform des Verfahrens der Vorformling über die erste Vorrichtung in eine vorgegebene Position innerhalb des Formwerkzeugs bewegt werden, wobei hierfür nach Schritt F und vor dem Bewegen zu der vorgegebenen Position die pneumatische Einrichtung der zweiten Vorrichtung deaktiviert und die pneumatische Einrichtung der ersten Vorrichtung aktiviert oder der bereits aktivierte Zustand beibehalten wird. Während des Bewegens in die vorgegebene Position kann auch hier der Vorformling bevorzugt durch die Erwärmungsvorrichtung der ersten Vorrichtung erwärmt werden, insbesondere um z.B. den fließfähigen Zustand der thermoplastischen Matrix aufrechtzuerhalten bzw. beizubehalten.

Besonders bevorzugt wird in Schritt (B) und / oder in Schritt (C) in den wenigstens einen Hohlraum der ersten Halteeinrichtung ein Schutzgas eingebracht und / oder in Schritt (F) wird besonders bevorzugt in den wenigstens einen Hohlraum der zweiten Halteeinrichtung ein Schutzgas eingebracht. Durch Einbringen des Schutzgases kann beim Erwärmen des Vorformlings mittels der Erwärmungsvorrichtungen eine Oxidation des Matrixmaterials der Matten, also des Matrixmaterials, in welches die Fasern wenigstens teilweise oder zur Gänze eingebettet sind, deutlich reduziert werden. Dies ist insbesondere dann von Vorteil, wenn es sich bei dem Matrixmaterial um ein oxidationsempfindliches Matrixmaterial handelt, wie z.B. Polyamid (PA), insbesondere Polyamid 6 und Polyamid 6.6, Polypropylen (PP), Polyethylen (PE), POM (Polyoxymethylen), Polyphenylensulfid (PPS), Polyethersulfon (PES),), Polybutylenterephthalat (PBT), Polyetheretherketon (PEEK), Polyetherimid (PEI), Polyethylenterephthalat (PET), vergleichbare Technische- oder Hochtemperatur-Kunststoffmaterialien oder Kombinationen der vorgenannten Kunststoffmaterialien.

### Kurzbeschreibung der Zeichnungen

Nachfolgend werden Ausführungsbeispiele der Erfindung anhand der beigefügten Zeichnungen näher erläutert. Es zeigt:
- Fig. 1: eine schematische Schnittdarstellung eines erstens Ausführungsbeispiels einer erfindungsgemäßen Vorrichtung zusammen mit einem Vorformling,
- Fig. 2: die Schnittdarstellung der Fig. 1, wobei der Vorformling an die Anlageseite des Gitterelements angesaugt ist,
- Fig. 3: eine schematische Schnittdarstellung eines zweiten Ausführungsbeispiels einer erfindungsgemäßen Vorrichtung,
- Fig. 4: eine schematische Schnittdarstellung einer ersten Vorrichtung eines ersten Ausführungsbeispiels eines erfindungsgemäßen Systems,
- Fig. 5: eine schematische Schnittdarstellung des ersten Ausführungsbeispiels des erfindungsgemäßen Systems zusammen mit einem Vorformling,
- Fig. 6A: eine schematische Schnittdarstellung eines zweiten Ausführungsbeispiels eines erfindungsgemäßen Systems zusammen mit einem Vorformling,
- Fig. 6B: eine schematische dreidimensionale Darstellung zur Veranschaulichung der Aufbaus des gitterförmigen Materials der Gitterelemente des in Fig. 6A gezeigten zweiten Ausführungsbeispiels des erfindungsgemäßen Systems,
- Fig. 7: das Ausführungsbeispiel gemäß Fig. 6A, wobei der Vorformling an die Anlageseite des Gitterelements der ersten Halteeinrichtung und an die Anlageseite des Gitterelements der zweiten Halteeinrichtung angesaugt ist,
- Fig. 8: eine Schnittdarstellung eines Teilbereichs eines dritten Ausführungsbeispiels eines erfindungsgemäßen Systems zusammen mit einer Schnittdarstellung eines Teilbereichs eines Vorformlings,
- Fig. 9: eine Schnittdarstellung eines Teilbereichs eines dritten Ausführungsbeispiels einer erfindungsgemäßen Vorrichtung zusammen mit einer Schnittdarstellung eines Teilbereichs eines Vorformlings, und
- Fig. 10: eine sehr schematische Darstellung zur Veranschaulichung eines Ausführungsbeispiels eines erfindungsgemäßen Verfahrens zum Erwärmen eines Vorformlings durch Verwendung eines erfindungsgemäßen Systems.

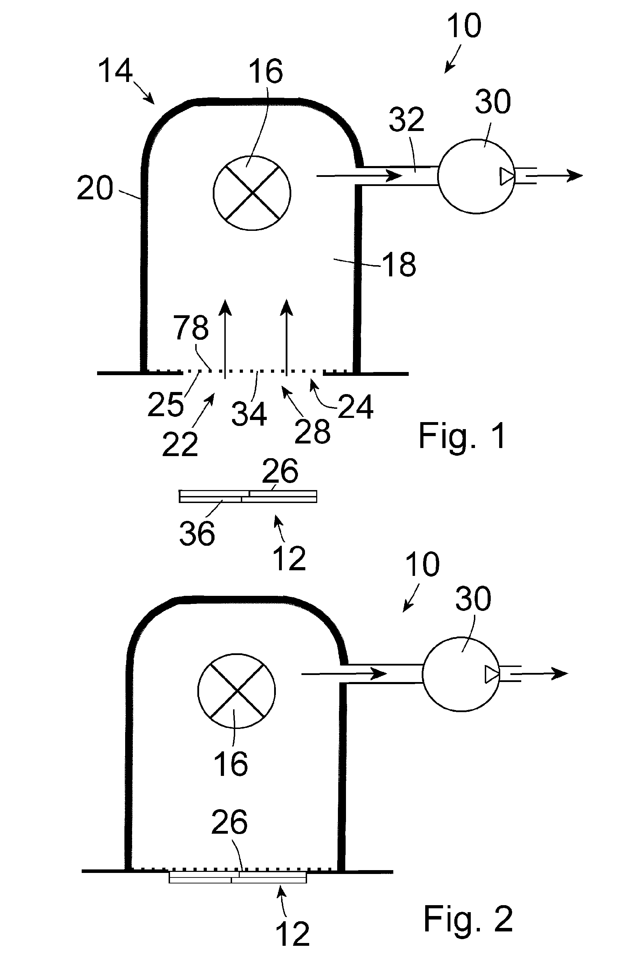

Das in Fig. 1 dargestellte erste Ausführungsbeispiel einer erfindungsgemäßen Vorrichtung 10 zum Halten und Erwärmen eines Vorformlings 12 weist eine Halteeinrichtung 14 zum Halten des Vorformlings 12 durch Saugkraft und eine Erwärmungsvorrichtung 16 zum Erwärmen des Vorformlings 12 auf. Die Halteeinrichtung 14 weist einen einseitig offenen Hohlraum 18 auf, der in einem Gehäuse 20 der Halteeinrichtung 14 ausgebildet ist. Der Zutritt bzw. Zugang zu dem Hohlraum 18 über die offene Seite 22 des Hohlraums 18 ist durch ein Gitterelement 24 aus einem gitterförmigen Material 25 versperrt. Eine Vorformling-Seite 26 des in Fig. 1 dargestellten Vorformlings 12 ist an eine Anlageseite 28 des Gitterelements 24 anlegbar. 9. Die Gitterstege 78 des gitterförmigen Materials 25 bestehen bei diesem Ausführungsbeispiel aus einem Drahtmaterial.

Die Vorrichtung 10 weist eine pneumatische Einrichtung 30 auf, die eine luftleitende Verbindung 32 zu dem Hohlraum 18 aufweist und eingerichtet ist, Luft über die luftleitende Verbindung 32 aus dem Hohlraum 18 zu saugen. Durch Aktivieren der pneumatischen Einrichtung 30 ist Luft von außerhalb des Hohlraums 18 durch die Öffnungen 34 des gitterförmigen Materials 25 hindurch in den Hohlraum 18 einströmbar (veranschaulicht durch vertikale Pfeile) und über die luftleitende Verbindung 32 aus dem Hohlraum 18 ausströmbar (veranschaulicht durch horizontalen Pfeil). Zum Halten der Vorformling-Seite 26 an der Halteeinrichtung 14 durch Saugkraft ist die Vorformling-Seite 26 durch Aktivieren der pneumatischen Einrichtung 30 an die Anlageseite 28 ansaugbar und verschließt dabei die offene Seite 22.

Die Erwärmungsvorrichtung 16 ist bei dem hier dargestellten Ausführungsbeispiel in dem einseitig offenen Hohlraum 18 angeordnet, um eine sehr wirksame Erwärmung des Vorformlings 12 zu ermöglichen, wenn dieser an die Anlageseite 28 angesaugt ist (vgl. hierzu insbesondere Fig. 2). Die Erwärmungsvorrichtung 16, welche insbesondere eine Infrarotstrahlungsquelle 16 zum Bestrahlen des Vorformlings 12 mit Infrarotstrahlung sein kann, kann alternativ jedoch an einer beliebigen anderen Stelle an der Halteeinrichtung 14 angeordnet sein.

Der in Fig. 1 in Schnittdarstellung gezeigte Vorformling 12 weist eine Mehrzahl von flächig ausgebildeten, faserverstärkten Matten 36 auf bzw. weist eine Mehrzahl von im Wesentlichen flächig ausgebildeten, faserverstärkten Matten 36 auf.

Die Fig. 2 veranschaulicht die Situation, in welcher der Vorformling 12 mit der Vorformling-Seite 26 an die Anlageseite 28 des Gitterelements 24 angesaugt ist, und zwar durch Aktivieren der pneumatischen Einrichtung 30. Die Fig. 2 dient auch der Veranschaulichung des Schritts B eines Ausführungsbeispiels eines erfindungsgemäßen Verfahrens zum Erwärmen des Vorformlings 12 durch Verwendung der in Fig. 1 dargestellten Vorrichtung 10, wobei das Verfahren die folgenden Schritte umfasst:
- Aufnehmen des Vorformlings 12 mittels der Vorrichtung 10 durch Ansaugen der Vorformling-Seite 26 an die Anlageseite 28 des Gitterelements 24 der Halteeinrichtung 14, wobei zum Ansaugen die pneumatische Einrichtung 30 aktiviert wird (Schritt A), und
- Erwärmen des Vorformlings 12 durch die Erwärmungsvorrichtung 16 (Schritt B).

Das Erwärmen des Vorformlings 12 erfolgt vorzugsweise, wenn die Vorformling-Seite 26 an die Anlageseite 28 angesaugt ist, wobei jedoch auch vor dem Ansaugen ein Erwärmen des Vorformlings 12 durch die Erwärmungsvorrichtung 16 vorgenommen werden kann. Vorzugsweise kann in Schritt B in den Hohlraum 18 der Halteeinrichtung 14 ein Schutzgas eingebracht werden. Durch Einbringen des Schutzgases kann beim Erwärmen des Vorformlings 12 mittels der Erwärmungsvorrichtung 16 eine Oxidation des Matrixmaterials der Matten 36, also des Matrixmaterials, in welches die Fasern (hier nicht dargestellt) des Vorformlings 12 wenigstens teilweise oder zur Gänze eingebettet sind, deutlich reduziert werden.

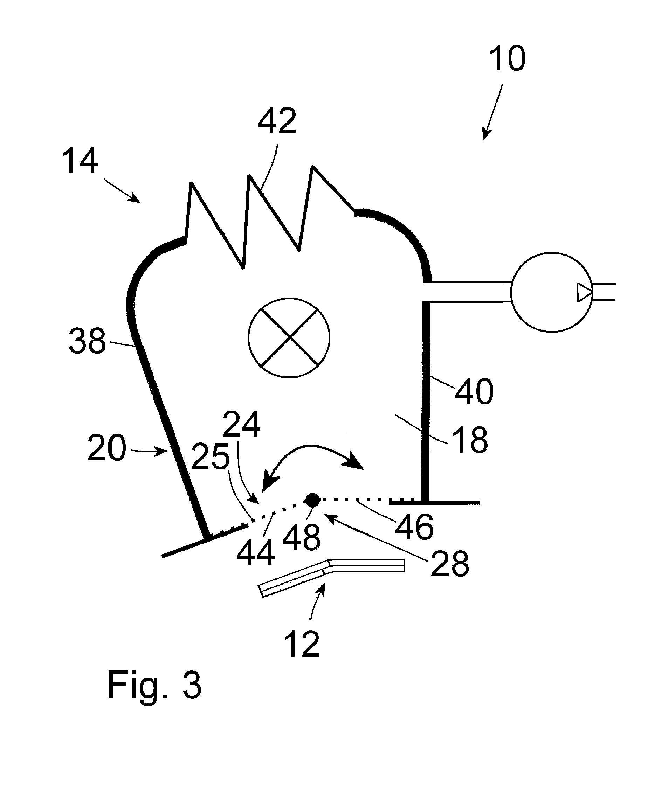

Die Fig. 3 zeigt eine schematische Schnittdarstellung eines zweiten Ausführungsbeispiels einer erfindungsgemäßen Vorrichtung 10 zum Halten und Erwärmen eines Vorformlings 12. Die Halteeinrichtung 14 der Vorrichtung 10 weist ein Gehäuse 20 auf, in dem der einseitig offener Hohlraum 18 ausgebildet ist. Das Gehäuse 20 weist ein erstes Gehäuseteil 38, ein zweites Gehäuseteil 40 und ein die beiden Gehäuseteile 38, 40 verbindendes Verbindungselement 42 auf. Das Gitterelement 24 aus dem gitterförmigen Material 25 umfasst ein erstes und ein zweites Teilelement 44, 46, wobei das erste Teilelement 44 an dem ersten Gehäuseteil 38 und das zweite Teilelement 46 an dem zweiten Gehäuseteil 40 befestigt ist. Das erste Teilelement 44 und das zweite Teilelement 46 sind durch eine Schwenkachse 48 miteinander verbunden wobei das erste Teilelement 44 zusammen mit dem ersten Gehäuseteil 38 durch Schwenken um die Schwenkachse 48 gegenüber dem zweiten Gehäuseteil 40 und dem zweiten Teilelement 46 verschwenkbar ist und umgekehrt. Bei dem Verbindungselement 42 handelt es sich um ein durch das Verschwenken der Gehäuseteile 38, 40 bzw. durch das Verschwenken des ersten und zweiten Gehäuseteils 38, 40 verformbares Verbindungselement 42 mit einer Faltenstruktur.

Die beiden Teilelemente 44, 46 bilden zusammen mit der Schwenkachse 48 vorteilhaft eine durch Verschwenken eines der beiden Teilelemente 44, 46 gegenüber dem anderen Teilelement 44, 46 in ihrer Kontur oder Form veränderbare Anlageseite 28, die besonders vorteilhaft durch Verschwenken an unterschiedliche Konturen des Vorformlings 12 anpassbar ist bzw. an diese wenigstens annäherbar ist, wie auch durch den in Fig. 3 dargestellten Vorformling 12 veranschaulicht. Das Verbindungselement 42 ist ein durch das Verschwenken der Gehäuseteile 38, 40 verformbares Verbindungselement und durch die Verformbarkeit vorteilhaft an unterschiedliche Schwenkstellungen der beiden Teilelemente 44, 46 zueinander anpassbar. Durch die Anpassbarkeit an unterschiedliche Konturen des Vorformlings 12 kann vorteilhaft ein sehr sicherer und fester Halt des Vorformlings 12 an der Halteeinrichtung 14 durch Saugkraft in Verbindung mit einer Konturanpassung geschaffen bzw. bereitgestellt werden. Insbesondere kann vorteilhaft auch ein Vorformling bzw. ein zweidimensionaler Vorformling nach geeignetem Erwärmen zur Erzielung einer erwünschten Vor-Form unter Verformen bzw. Verbiegen an die Anlageseite 28 angesaugt und an diese angepasst werden.

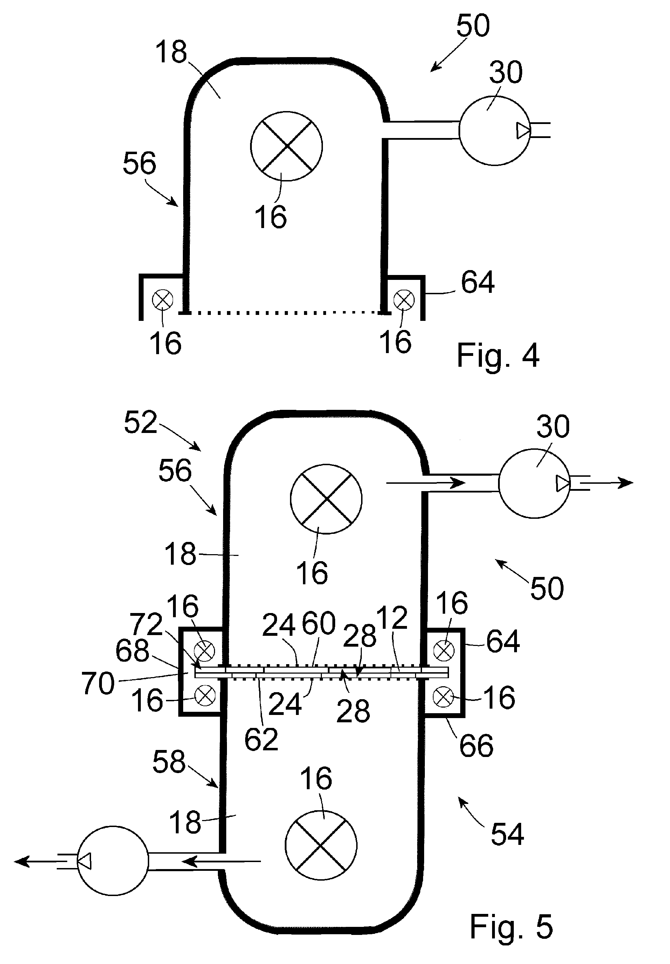

Die Fig. 4 zeigt eine schematische Schnittdarstellung einer ersten Vorrichtung 50 eines ersten Ausführungsbeispiels eines erfindungsgemäßen Systems 52 und die Fig. 5 zeigt eine schematische Schnittdarstellung des ersten Ausführungsbeispiels des erfindungsgemäßen Systems 52 zusammen mit einem Vorformling 12.

Das in Fig. 5 dargestellte System 52 zum Halten und Erwärmen eines Vorformlings 12 weist die erste erfindungsgemäße Vorrichtung 50 zum Halten und Erwärmen eines Vorformlings (vgl. auch Fig. 4) und eine zweite erfindungsgemäße Vorrichtung 54 zum Halten und Erwärmen eines Vorformlings auf. Die erste Vorrichtung 50 weist eine erste Halteeinrichtung 56 auf und die zweite Vorrichtung 54 weist eine zweite Halteeinrichtung 58 auf.

Die erste Halteeinrichtung 56 ist zum Halten einer ersten von zwei voneinander abgewandten Vorformling-Seiten 60, 62 des Vorformlings 12 an der ersten Halteeinrichtung 56 vorgesehen und die Erwärmungsvorrichtung 16 der ersten Vorrichtung 50 ist zum Erwärmen des Vorformlings 12 vorgesehen, wenn der Vorformling 12 mit ersten Vorformling-Seite 60 an der Anlageseite 28 des Gitterelements 24 der ersten Halteeinrichtung 56 anliegt bzw. an dieser angesaugt ist (wie in Fig. 5 veranschaulicht). Die zweite Halteeinrichtung 58 ist zum Halten der zweiten Vorformling-Seite 62 des Vorformlings 12 an der zweiten Halteeinrichtung 58 vorgesehen und die Erwärmungsvorrichtung 16 der zweiten Vorrichtung 54 ist zum Erwärmen des Vorformlings 12 vorgesehen, wenn der Vorformling 12 mit zweiten Vorformling-Seite 62 an der Anlageseite 28 des Gitterelements 24 der zweiten Halteeinrichtung 58 anliegt bzw. an dieser angesaugt ist (auch in Fig. 5 veranschaulicht).

Die erste Halteeinrichtung 56 und die zweite Halteeinrichtung 58 sind in der in Fig. 5 veranschaulichten gegenüberliegenden Anordnung anordenbar, bei der das Gitterelement 24 der ersten Halteeinrichtung 56 dem Gitterelement 24 der zweiten Halteeinrichtung 58 zugewandt ist, wobei der Vorformling 12 in der gegenüberliegenden Anordnung zwischen den Gitterelementen 24 anordenbar und die erste Vorformling-Seite 60 an die Anlageseite 28 des Gitterelements 24 der ersten Halteeinrichtung 56 und die zweite Vorformling-Seite 62 an die Anlageseite 28 des Gitterelements 24 der zweiten Halteeinrichtung 58 anlegbar ist.

Die erste Halteeinrichtung 56 weist ein erstes Einhausungselement 64 und die zweite Halteeinrichtung 58 ein zweites Einhausungselement 66 auf, wobei das erste Einhausungselement 64 sich um den einseitig offenen Hohlraum 18 der ersten Halteeinrichtung 56 herum umlaufend erstreckt, wobei das zweite Einhausungselement 66 sich um den einseitig offenen Hohlraum 18 der zweiten Halteeinrichtung 58 herum umlaufend erstreckt, wobei das erste und das zweite Einhausungselement 64, 66 in der in Fig. 5 veranschaulichten gegenüberliegenden Anordnung eine Einhausung 68 mit einem umlaufenden Hohlraum 70 ausbilden, der zum Einhausen eines umlaufenden Randbereichs72 des zwischen den Gitterelementen 24 anordenbaren Vorformlings 12 vorgesehen ist. Zum Erwärmen des eingehausten Randbereichs 72 sind jeweils zwei weitere Erwärmungsvorrichtungen 16 in dem ersten und dem zweiten Einhausungselement 64, 66 angeordnet. Von einem erforderlichen aufwendigen Nachheizen des umlaufenden Randbereichs 72 kann durch die bereitgestellte Einhausung 68 vorteilhaft abgesehen werden.

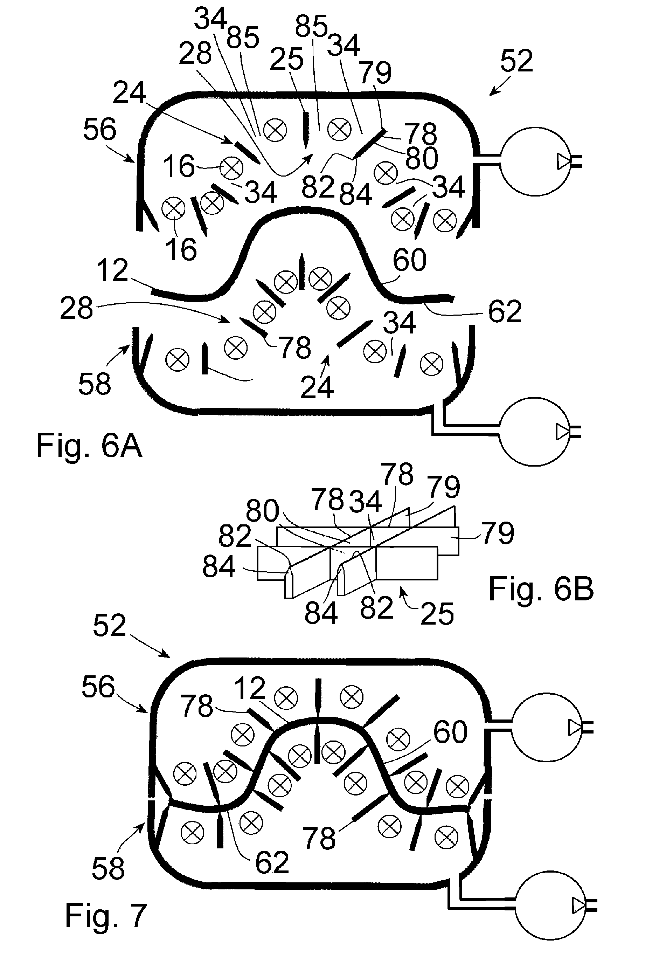

Die Fig. 6A und 7 zeigen jeweils eine schematische Schnittdarstellung eines zweiten Ausführungsbeispiels eines erfindungsgemäßen Systems 52 zusammen mit einem Vorformling 12, wobei die Fig. 7 den Zustand veranschaulicht, in dem der Vorformling 12 mit einer ersten Vorformling-Seite 60 an die Anlageseite 28 des Gitterelements 24 der ersten Halteeinrichtung 56 und mit einer zweiten Vorformling-Seite 62 an die Anlageseite 28 des Gitterelements 24 der zweiten Halteeinrichtung 58 angesaugt ist (vgl. hierzu auch die Fig. 6A, welche die Situation vor dem Ansaugen veranschaulicht).

Bei dem in den Fig. 6A und 7 veranschaulichten zweiten Ausführungsbeispiel des erfindungsgemäßen Systems 52 bestehen die Gitterstege 78 des gitterförmigen Materials 25 des Gitterelements 24 der ersten und zweiten Halteeinrichtung 56, 58 aus einem bandförmigen Material 79. Jede der Öffnungen 34 des gitterförmigen Materials 25 ist von vier Flachseiten 80 des bandförmigen Materials 79 begrenzt. Dies ist insbesondere in Fig. 6B veranschaulicht, die eine schematische dreidimensionale Darstellung zur Veranschaulichung der Aufbaus des gitterförmigen Materials 25 der Gitterelemente 24 des in den Fig. 6A und 7 gezeigten zweiten Ausführungsbeispiels des erfindungsgemäßen Systems zeigt - in dieser dreidimensionalen Darstellung ist die Krümmung der Gitterelemente 24 zur Vereinfachung der Darstellung nicht gezeigt. Gezeigt ist in Fig. 6B nur eine Öffnung 34. Die erste bzw. zweite Vorformling-Seite 60, 62 ist zum Anlegen an die Anlageseite 28 des Gitterelements 24 der ersten bzw. zweiten Halteeinrichtung 56, 58 an Seitenflächen 82 bzw. Stirnflächen 82 der Gitterstege 78 anlegbar, wobei ein Randabschnitt 84 jedes Gitterstegs 78 zu der Seitenfläche 82 hin, an welche die erste bzw. zweite Vorformling-Seite 60, 62 anlegbar ist, mit abnehmender Dicke ausgebildet ist (vgl. hierzu insbesondere Fig. 6B, aber auch Fig. 6A). Die Randabschnitte 84 sind hier nach Art einer Messer-Scheide mit einer Kante 82 bzw. Seitenfläche 82 ausgebildet, an bzw. auf welcher die erste bzw. zweite Vorformling-Seite 60, 62 anlegbar ist. Durch Vorsehen der kleinflächigen Seitenflächen 82 ist das System 52 sehr gut auch an unebene Oberflächenbereiche des Vorformlings anpassbar bzw. gegenüber diesen tolerant.

Bei der ersten und der zweiten Halteeinrichtung 56, 58 sind eine Mehrzahl von Erwärmungsvorrichtungen 16 vorgesehen, die in jeweils einer der Öffnungen 34 angeordnet sind, wobei durch das Anordnen jeweils einer Erwärmungsvorrichtung 16 in jeweils einer der Öffnungen 34 eine vorteilhafte Trennung von einzelnen Heizfeldern bzw. Heizzonen 85 mit typischen Flächengrößen von 25 cm² bis 100 cm² bereitgestellt wird. Die Heizzonen 85 können nach Art eines Heizmatrixkonzepts vorteilhaft eine angepasste ortsabhängige Erwärmung des Vorformlings 12 ermöglichen, wobei die Anzahl der Heizfelder 85 beliebig sein kann. So sind abweichend von dem Ausführungsbeispiel gemäß Fig. 6A auch einige hundert Heizzonen bzw. 100 bis 250 Heizzonen möglich. Bei den Erwärmungsvorrichtungen 16 kann es sich insbesondere um Halogenlampen 16 handeln. Durch Vorsehen der Mehrzahl der Halogenlampen 16 kann jede einzelne mit einer vergleichsweise geringen Leistung (z.B. 25 Watt bis 100 Watt) und einer vergleichsweise geringen Bauhöhe ausgebildet sein, so dass insgesamt gesehen, die Bauhöhe und das Gewicht des Systems 52 sehr gering ausgeführt werden kann. Auf diese Weise ist ein Flächengewicht des Systems von ca. 25 kg/m² möglich.

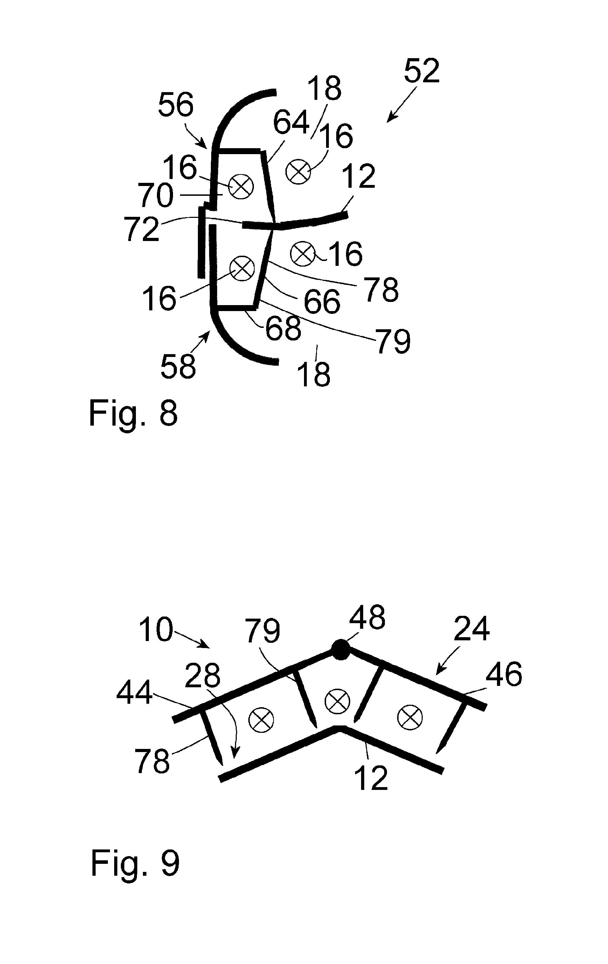

Die Fig. 8 zeigt eine Schnittdarstellung eines Teilbereichs eines dritten Ausführungsbeispiels eines erfindungsgemäßen Systems 52 zusammen mit einer Schnittdarstellung eines Teilbereichs eines Vorformlings 12. Auch bei diesem Ausführungsbeispiel weist die erste Halteeinrichtung 56 ein erstes Einhausungselement 64 und die zweite Halteeinrichtung 58 ein zweites Einhausungselement 66 auf, wobei jeweils ein Gittersteg 78 eine Wandung des ersten bzw. zweiten Einhausungselements 64, 66 bildet. Das erste und das zweite Einhausungselement 64, 66 bilden in der gegenüberliegenden Anordnung eine Einhausung 68 mit einem umlaufenden Hohlraum 70 aus, der zum Einhausen des umlaufenden Randbereichs 72 des zwischen den Gitterelementen anordenbaren Vorformlings 12 vorgesehen ist. Das erste Einhausungselement 64 erstreckt sich um den einseitig offenen Hohlraum 18 der ersten Halteeinrichtung 56 herum umlaufend und das zweite Einhausungselement 66 erstreckt sich um den einseitig offenen Hohlraum 18 der zweiten Halteeinrichtung 58 herum umlaufend. Zum Erwärmen des Randbereichs 72 ist jeweils wenigstens eine weitere Erwärmungsvorrichtung 16 in dem ersten und dem zweiten Einhausungselement 64, 66 angeordnet. Auch bei diesem Ausführungsbeispiel bestehen die Gitterstege 78 des gitterförmigen Materials des Gitterelements der ersten und zweiten Halteeinrichtung 56, 58 aus einem bandförmigen Material 79.

Die Fig. 9 zeigt eine Schnittdarstellung eines Teilbereichs eines dritten Ausführungsbeispiels einer erfindungsgemäßen Vorrichtung 10 zusammen mit einer Schnittdarstellung eines Teilbereichs eines Vorformlings 12. Auch bei diesem Ausführungsbeispiel bestehen die Gitterstege 78 des gitterförmigen Materials des Gitterelements 24 aus einem bandförmigen Material 79. Wie bei dem in Fig. 3 dargestellten Ausführungsbeispiel umfasst das Gitterelement 24 aus dem gitterförmigen Material ein erstes und ein zweites Teilelement 44, 46, die durch eine Schwenkachse 48 miteinander verbunden sind, wobei das erste Teilelement 44 an einem ersten Gehäuseteil und das zweite Teilelement 46 an einem zweiten Gehäuseteil befestigt ist (hier nicht näher dargestellt), und wobei das erste Teilelement 44 zusammen mit dem ersten Gehäuseteil durch Schwenken um die Schwenkachse 48 gegenüber dem zweiten Gehäuseteil und dem zweiten Teilelement 46 verschwenkbar ist und umgekehrt. Die beiden Teilelemente 44, 46 bilden zusammen mit der Schwenkachse 48 vorteilhaft eine durch Verschwenken eines der beiden Teilelemente 44, 46 gegenüber dem anderen Teilelement 44, 46 in ihrer Kontur oder Form veränderbare Anlageseite 28, die besonders vorteilhaft durch Verschwenken an unterschiedliche Konturen des Vorformlings 12 anpassbar ist bzw. an diese wenigstens annäherbar ist, wie auch in Fig. 9 schematisch veranschaulicht.

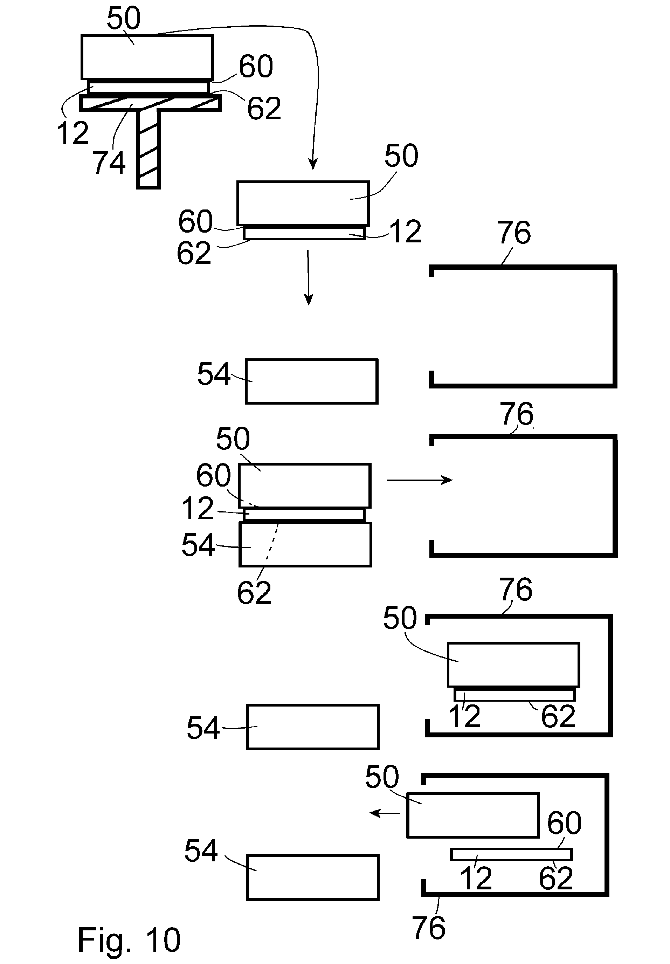

Die Fig. 10 zeigt eine sehr schematische Darstellung zur Veranschaulichung eines Ausführungsbeispiels eines erfindungsgemäßen Verfahrens zum Erwärmen eines Vorformlings 12 durch Verwendung eines erfindungsgemäßen Systems. Das Verfahren umfasst die Schritte A bis F.

In Schritt A erfolgt zunächst das Aufnehmen des Vorformlings 12 von einem Werkstückträger 74 mittels der ersten Vorrichtung 50 durch Ansaugen der ersten Vorformling-Seite 60 an die Anlageseite des Gitterelements der ersten Vorrichtung 50, wobei zum Ansaugen die pneumatische Einrichtung der ersten Vorrichtung 50 aktiviert wird (die Halteeinrichtung, die Erwärmungsvorrichtung und die pneumatische Einrichtung sind zur Vereinfachung der Darstellung hier nicht näher veranschaulicht). Anschließend wird in Schritt C die erste Vorrichtung 50 und der an der ersten Vorrichtung 50 durch Saugkraft gehaltene Vorformling 12 zu der zweiten Vorrichtung 54 bewegt - symbolisiert durch einen entsprechenden Pfeil - und die zweite Vorformling-Seite 62 wird an die Anlageseite des Gitterelements der zweiten Vorrichtung 54 angelegt. Die zweite Vorrichtung 54 (auch die Halteeinrichtung, die Erwärmungsvorrichtung und die pneumatische Einrichtung der zweiten Vorrichtung sind zur Vereinfachung der Darstellung hier nicht näher veranschaulicht) befindet sich in naher Umgebung eines Formwerkzeugs 76 zum Formen der endgültigen Kontur eines Bauteils aus dem Vorformling 12. Das Erwärmen des Vorformlings 12 durch die Erwärmungsvorrichtung der ersten Vorrichtung 50 gemäß Schritt B des Verfahrens erfolgt hier insbesondere auch in Schritt C während des Bewegens der ersten Vorrichtung 50 samt Vorformling 12.

Zum Bewegen der ersten Vorrichtung 50 und des an der ersten Vorrichtung 50 gehaltenen Vorformlings 12 zu der zweiten Vorrichtung 54 kann z.B. eine Transporteinheit, wie z.B. ein Industrieroboter vorgesehen sein (hier nicht dargestellt), welcher die erste Vorrichtung 50 samt Vorformling 12 ergreifen oder aufnehmen kann und zu der zweiten Vorrichtung 54 bewegen kann, um die zweite Vorformling-Seite 62 an die Anlageseite des Gitterelements der zweiten Vorrichtung 54 anzulegen.

Nach Schritt C erfolgt in Schritt D das Deaktivieren der pneumatischen Einrichtung der ersten Vorrichtung 50 und nach Schritt D erfolgt in Schritt E das Ansaugen der zweiten Vorformling-Seite 62 an die Anlageseite des Gitterelements der zweiten Vorrichtung 54 durch Aktivieren der pneumatischen Einrichtung der zweiten Vorrichtung 54. In Schritt F erfolgt dann das Erwärmen des Vorformlings 12 durch die Erwärmungsvorrichtung der zweiten Vorrichtung. Zur Erzielung einer sehr wirksamen beidseitigen Erwärmung bleibt nach Schritt D die erste Vorformling-Seite 60 an der Anlageseite des Gitterelements der ersten Vorrichtung 50 angelegt, und in Schritt F wird der Vorformling 12 zusätzlich durch die Erwärmungsvorrichtung der ersten Vorrichtung 50 erwärmt.

Nach Schritt F kann dann der Vorformling 12 über bzw. durch die erste Vorrichtung 50 in eine vorgegebene Position innerhalb des Formwerkzeugs 76 bewegt werden, wobei hierfür nach Schritt F und vor dem Bewegen zu der vorgegebenen Position die pneumatische Einrichtung der zweiten Vorrichtung 54 zu deaktivieren und die pneumatische Einrichtung der ersten Vorrichtung 50 zu aktivieren ist. Während des Bewegens - wobei zum Bewegen der ersten Vorrichtung 50 samt Vorformling 12 insbesondere ein Industrieroboter verwendet bzw. eingesetzt werden kann - in die vorgegebene Position kann der Vorformling 12 bevorzugt durch die Erwärmungsvorrichtung der ersten Vorrichtung 50 erwärmt werden, insbesondere um z.B. den fließfähigen Zustand der thermoplastischen Matrix, in welche die Fasern des Vorformlings 12 wenigstens teilweise oder zur Gänze eingebettet sind, aufrechtzuerhalten bzw. beizubehalten. Nach dem Einnehmen der vorgegebenen Position in dem Formwerkzeug 76 kann die erste Vorrichtung 50 nach Deaktivieren der pneumatischen Einrichtung der ersten Vorrichtung 50 aus dem Formwerkzeug 76 herausbewegt werden und der Vorformling 12 kann in der vorgegebenen Position angeordnet bleiben, um aus diesem in dem Formwerkzeug 76 ein Bauteil zu formen.

### Bezugszeichenliste

| | |
|---|---|
| 10 | Vorrichtung zum Halten und Erwärmen eines Vorformlings |
| 12 | Vorformling |
| 14 | Halteeinrichtung |
| 16 | Erwärmungsvorrichtung |
| 18 | Hohlraum |
| 20 | Gehäuse |
| 22 | offene Seite |
| 24 | Gitterelement |
| 25 | gitterförmiges Material |
| 26 | Vorformling-Seite |
| 28 | Anlageseite |
| 30 | pneumatische Einrichtung |
| 32 | luftleitende Verbindung |
| 34 | Öffnung gitterförmiges Material |
| 36 | Matte |
| 38 | erstes Gehäuseteil |
| 40 | zweites Gehäuseteil |
| 42 | Verbindungselement |
| 44 | erstes Teilelement |
| 46 | zweites Teilelement |
| 48 | Schwenkachse |
| 50 | erste Vorrichtung |
| 52 | System |
| 54 | zweite Vorrichtung |
| 56 | erste Halteeinrichtung |
| 58 | zweite Halteeinrichtung |
| 60 | erste Vorformling-Seite |
| 62 | zweite Vorformling-Seite |
| 64 | erstes Einhausungselement |
| 66 | zweites Einhausungselement |
| 68 | Einhausung |
| 70 | umlaufender Hohlraum |
| 72 | umlaufender Randbereich |
| 74 | Werkstückträger |
| 76 | Formwerkzeug |
| 78 | Gittersteg |
| 79 | bandförmiges Material |
| 80 | Flachseite |
| 82 | Seitenfläche |
| 84 | Randabschnitt Gittersteg |
| 85 | Heizzone |

## Patentansprüche

1. Vorrichtung (10) zum Halten und Erwärmen eines Vorformlings (12), wobei der Vorformling (12) wenigstens eine oder eine Mehrzahl von im Wesentlichen flächig ausgebildeten, faserverstärkten Matten (36) umfasst,
mit einer Halteeinrichtung (14) zum Halten des Vorformlings (12) durch Saugkraft und wenigstens einer Erwärmungsvorrichtung (16) zum Erwärmen des Vorformlings (12),
wobei die Halteeinrichtung (14) wenigstens einen einseitig offenen Hohlraum (18) aufweist, wobei der Zutritt zu dem Hohlraum (18) über die offene Seite (22) des Hohlraums (18) durch wenigstens ein Gitterelement (24) aus einem gitterförmigen Material (25) versperrt ist, wobei eine Vorformling-Seite (26, 60, 62) des Vorformlings (12) an eine Anlageseite (28) des Gitterelements (24) anlegbar ist,
wobei die Vorrichtung (10) wenigstens eine pneumatische Einrichtung (30) aufweist, die eine luftleitende Verbindung (32) zu dem Hohlraum (18) aufweist und eingerichtet ist, Luft über die luftleitende Verbindung (32) aus dem Hohlraum (18) zu saugen, wobei durch Aktivieren der pneumatischen Einrichtung (30) Luft von außerhalb des Hohlraums (18) durch die Öffnungen (34) des gitterförmigen Materials (25) hindurch in den Hohlraum (18) einströmbar und über die luftleitende Verbindung (32) aus dem Hohlraum (18) ausströmbar ist,
wobei zum Halten der Vorformling-Seite (26, 60, 62) an der Halteeinrichtung (14) durch Saugkraft die Vorformling-Seite (26, 60, 62) durch Aktivieren der pneumatischen Einrichtung (30) an die Anlageseite (28) ansaugbar ist und dabei die offene Seite (22) verschließt,
wobei die Erwärmungsvorrichtung (16) an oder in der Halteeinrichtung (14), vorzugsweise in dem einseitig offenen Hohlraum (18), angeordnet ist und zum Erwärmen des Vorformlings (12) vorgesehen ist, wenn der Vorformling (12) mit der Vorformling-Seite (26, 60, 62) an der Anlageseite (28) anliegt.

2. Vorrichtung (10) nach Anspruch 1, **dadurch gekennzeichnet, dass** die Erwärmungsvorrichtung (16) eine Wärmestrahlungsquelle zum Bestrahlen des Vorformlings (12) mit Wärmestrahlung, vorzugsweise eine Infrarotstrahlungsquelle zum Bestrahlen des Vorformlings (12) mit Infrarotstrahlung, ist.

3. Vorrichtung (10) nach einem der vorangehenden Ansprüche, **dadurch gekennzeichnet, dass** die Anlageseite (28) des Gitterelements (24) eine Kontur aufweist, die der Kontur des Vorformlings (12) angepasst oder anpassbar ist.

4. Vorrichtung (10) nach einem der vorangehenden Ansprüche, **dadurch gekennzeichnet, dass** die pneumatische Einrichtung (30) zum Lösen der Vorformling-Seite (26, 60, 62) von dem Gitterelement (24) ferner eingerichtet ist, zum Ausbilden eines Überdrucks in dem Hohlraum (18), Luft von außerhalb des Hohlraums (18) über die luftleitende Verbindung (32) in den Hohlraum (18) einströmen zu lassen.

5. Vorrichtung (10) nach einem der vorangehenden Ansprüche, **dadurch gekennzeichnet, dass** die Halteeinrichtung (14) ein Gehäuse (20) aufweist, in dem der einseitig offene Hohlraum (18) ausgebildet ist, wobei das Gehäuse (20) ein erstes Gehäuseteil (38), ein zweites Gehäuseteil (40) und ein die beiden Gehäuseteile (38, 40) verbindendes Verbindungselement (42) aufweist, wobei das Gitterelement (24) aus dem gitterförmigen Material (25) ein erstes und ein zweites Teilelement (44, 46) umfasst, wobei das erste Teilelement (44) an dem ersten Gehäuseteil (38) und das zweite Teilelement (46) an dem zweiten Gehäuseteil (40) befestigt ist, wobei das erste Teilelement und das zweite Teilelement (44, 46) durch eine Schwenkachse (48) miteinander verbunden sind, wobei das erste Teilelement (44) zusammen mit dem ersten Gehäuseteil (38) durch Schwenken um die Schwenkachse (48) gegenüber dem zweiten Gehäuseteil (40) und dem zweiten Teilelement (46) verschwenkbar ist und umgekehrt, und wobei das Verbindungselement (42) ein durch das Verschwenken der Gehäuseteile (38, 40) verformbares Verbindungselement (42) ist.

6. Vorrichtung (10) nach einem der vorangehenden Ansprüche, **dadurch gekennzeichnet, dass** die Gitterstege (78) des gitterförmigen Materials (25) des Gitterelements (24) aus einem bandförmigen Material (79) bestehen, wobei jede der Öffnungen (34) des gitterförmigen Materials (25) von wenigstens drei Flachseiten (80) des bandförmigen Materials (79) begrenzt ist.

7. Vorrichtung (10) nach Anspruch 6, **dadurch gekennzeichnet, dass** die Vorformling-Seite (26, 60, 62) zum Anlegen an die Anlageseite (28) an Seitenflächen (82) der Gitterstege (78) anlegbar ist, wobei wenigstens ein Randabschnitt (84) jedes Gitterstegs (78) zu der Seitenfläche (82) hin, an welche die Vorformling-Seite (26, 60, 62) anlegbar ist, mit abnehmender Dicke ausgebildet ist.

8. Vorrichtung (10) nach einem der Ansprüche 1 bis 5, **dadurch gekennzeichnet, dass** die Gitterstege (78) des gitterförmigen Materials (25) aus einem Drahtmaterial bestehen.

9. System (52) zum Halten und Erwärmen eines Vorformlings (12), wobei das System (52) eine erste Vorrichtung (50) zum Halten und Erwärmen eines Vorformlings (12) nach einem der Ansprüche 1 bis 8 und eine zweite Vorrichtung (54) zum Halten und Erwärmen eines Vorformlings (12) nach einem der Ansprüche 1 bis 8 aufweist,
wobei die erste Vorrichtung (50) eine erste Halteeinrichtung (56) aufweist, und wobei die zweite Vorrichtung (54) eine zweite Halteeinrichtung (58) aufweist,
wobei die erste Halteeinrichtung (56) zum Halten einer ersten von zwei voneinander abgewandten Vorformling-Seiten (60, 62) des Vorformlings (12) vorgesehen ist, wobei die Erwärmungsvorrichtung (16) der ersten Vorrichtung (50) zum Erwärmen des Vorformlings (12) vorgesehen ist, wenn der Vorformling (12) mit der ersten Vorformling-Seite (60) an der Anlageseite (28) des Gitterelements (24) der ersten Halteeinrichtung (56) anliegt, und
wobei die zweite Halteeinrichtung (58) zum Halten der zweiten Vorformling-Seite (62) des Vorformlings (12) vorgesehen ist, wobei die Erwärmungsvorrichtung (16) der zweiten Vorrichtung (54) zum Erwärmen des Vorformlings (12) vorgesehen ist, wenn der Vorformling (12) mit der zweiten Vorformling-Seite (62) an der Anlageseite (28) des Gitterelements (24) der zweiten Halteeinrichtung (58) anliegt,
wobei die erste Halteeinrichtung (56) und die zweite Halteeinrichtung (58) in einer gegenüberliegenden Anordnung anordenbar sind, bei der das Gitterelement (24) der ersten Halteeinrichtung (56) dem Gitterelement (24) der zweiten Halteeinrichtung (58) zugewandt ist, wobei der Vorformling (12) in der gegenüberliegenden Anordnung zwischen den Gitterelementen (24) anordenbar und die erste Vorformling-Seite (60) an die Anlageseite (28) des Gitterelements (24) der ersten Halteeinrichtung (56) und die zweite Vorformling-Seite (62) an die Anlageseite (28) des Gitterelements (24) der zweiten Halteeinrichtung (58) anlegbar ist.

10. System (52) nach Anspruch 9, **dadurch gekennzeichnet, dass** die erste Halteeinrichtung (56) ein erstes Einhausungselement (64) aufweist, und dass die zweite Halteeinrichtung (58) ein zweites Einhausungselement (66) aufweist, wobei das erste Einhausungselement (64) sich um den einseitig offenen Hohlraum (18) der ersten Halteeinrichtung (56) herum umlaufend erstreckt, wobei das zweite Einhausungselement (66) sich um den einseitig offenen Hohlraum (18) der zweiten Halteeinrichtung (58) herum umlaufend erstreckt, wobei das erste und das zweite Einhausungselement (64, 66) in der gegenüberliegenden Anordnung eine Einhausung (68) mit einem umlaufenden Hohlraum (70) ausbilden, der zum Einhausen eines umlaufenden Randbereichs (72) des zwischen den Gitterelementen (24) anordenbaren Vorformlings (12) vorgesehen ist, wobei zum Erwärmen des eingehausten Randbereichs (72) wenigstens eine weitere Erwärmungsvorrichtung (16) in dem ersten und / oder zweiten Einhausungselement (64, 66) angeordnet ist.

11. Verfahren zum Erwärmen eines Vorformlings (12), der wenigstens eine oder eine Mehrzahl von im Wesentlichen flächig ausgebildeten, faserverstärkten Matten (36) umfasst, durch Verwendung einer Vorrichtung (10) nach einem der Ansprüche 1 bis 8, wobei das Verfahren die folgenden Schritte umfasst:
(A) Aufnehmen des Vorformlings (12) mittels der Vorrichtung (10) durch Ansaugen der Vorformling-Seite (26, 60, 62) an die Anlageseite (28) des Gitterelements (24) der Halteeinrichtung (14), wobei zum Ansaugen die pneumatische Einrichtung (30) aktiviert wird, und
(B) Erwärmen des Vorformlings (12) durch die Erwärmungsvorrichtung (16).

12. Verfahren zum Erwärmen eines Vorformlings (12), der wenigstens eine oder eine Mehrzahl von im Wesentlichen flächig ausgebildeten, faserverstärkten Matten (36) umfasst, durch Verwendung eines Systems (52) nach Anspruch 9 oder 10, wobei das Verfahren die folgenden Schritte umfasst:
(A) Aufnehmen des Vorformlings (12) mittels der ersten Vorrichtung (50) durch Ansaugen der ersten Vorformling-Seite (60) an die Anlageseite (28) des Gitterelements (24) der ersten Halteeinrichtung (56), wobei zum Ansaugen die pneumatische Einrichtung (30) der ersten Vorrichtung (50) aktiviert wird,
(B) Erwärmen des Vorformlings (12) durch die Erwärmungsvorrichtung (16) der ersten Vorrichtung (50),
(C) Bewegen der ersten Vorrichtung (50) und des an der ersten Vorrichtung (50) durch Saugkraft gehaltenen Vorformlings (12) zu der zweiten Vorrichtung (54) und Anlegen der zweiten Vorformling-Seite (62) an die Anlageseite (28) des Gitterelements (24) der zweiten Halteeinrichtung (58),
(D) Deaktivieren der pneumatischen Einrichtung (30) der ersten Vorrichtung (50),
(E) Ansaugen der zweiten Vorformling-Seite (62) an die Anlageseite (28) des Gitterelements (24) der zweiten Halteeinrichtung (58) durch Aktivieren der pneumatischen Einrichtung (30) der zweiten Vorrichtung, und
(F) Erwärmen des Vorformlings (12) durch die Erwärmungsvorrichtung (16) der zweiten Vorrichtung (54).

13. Verfahren nach Anspruch 12, **dadurch gekennzeichnet, dass** in Schritt (B) und / oder in Schritt (C) in den wenigstens einen Hohlraum (18) der ersten Halteeinrichtung (56) ein Schutzgas eingebracht wird und / oder dass in Schritt (F) in den wenigstens einen Hohlraum (18) der zweiten Halteeinrichtung (58) ein Schutzgas eingebracht wird.

14. Verfahren nach Anspruch 12 oder 13, **dadurch gekennzeichnet, dass** das Erwärmen des Vorformlings (12) durch die Erwärmungsvorrichtung (16) der ersten Vorrichtung (50) in Schritt (B) auch während des Schritts (C) vorgenommen wird.

15. Verfahren nach einem der Ansprüche 12 bis 14, **dadurch gekennzeichnet, dass** nach Schritt (D) die erste Vorformling-Seite (60) an der Anlageseite (28) des Gitterelements (24) der ersten Halteeinrichtung (56) angelegt bleibt, und dass in Schritt (F) der Vorformling (12) zusätzlich durch die Erwärmungsvorrichtung (16) der ersten Vorrichtung (50) erwärmt wird.
